Europäisches Patentamt

European Patent Office

Office européen des brevets

(19)

(11) Veröffentlichungsnummer : **0 140 064**
**B1**

# (12) EUROPÄISCHE PATENTSCHRIFT

(45) Veröffentlichungstag der Patentschrift :
02.12.87

(51) Int. Cl.⁴ : **G 01 L   1/20, G 01 L   9/00**

(21) Anmeldenummer : **84110672.7**

(22) Anmeldetag : **07.09.84**

(54) **Kraft- bzw. Druckmessgeber.**

(30) Priorität : **15.09.83 DE 8326488 U**

(43) Veröffentlichungstag der Anmeldung :
**08.05.85 Patentblatt 85/19**

(45) Bekanntmachung des Hinweises auf die Patenterteilung : **02.12.87 Patentblatt 87/49**

(84) Benannte Vertragsstaaten :
**DE FR GB IT**

(56) Entgegenhaltungen :
**DE-A- 2 854 080**
**DE-A- 3 011 266**
**DE-B- 2 514 170**
**GB-A- 1 557 588**
**US-A- 2 812 657**

(73) Patentinhaber : **ROBERT BOSCH GMBH**
**Postfach 50**
**D-7000 Stuttgart 1 (DE)**

(72) Erfinder : **Dobler, Klaus, Dr. Dipl.-Ing.**
**Bettäckerstrasse 12**
**D-7016 Gerlingen (DE)**
Erfinder : **Heinz, Rudolf, Dr., Dipl.-Ing.**
**Eltinger Weg 26**
**D-7253 Renningen (DE)**

EP 0 140 064 B1

## Beschreibung

### Stand der Technik

Die Erfindung geht aus von einem Kraft- bzw. Druckmessgeber nach der Gattung des Hauptanspruchs. Messgeber dieser Gattung werden im Gegensatz zu den bekannten Dehnmeßstreifen direkt zwischen den Kraftübertragungsflachen der beiden Teile angeordnet, wodurch sich grundsätzlich auch die Verteilung der Kräfte über die Flachen ermitteln läßt. Bei einer bekannten Ausführung eines Kraft- bzw. Druckmessgebers der gattungsmäßigen Art (DE-A1-3 011 266) ist die Trägerfolie aus einem elastisch zusammendrückbaren Material gebildet, dessen elektrische Leitfähigkeit durch Druckeinwirkung größer wird. Die an den Meßstellen liegenden elektrisch kontaktierten Bereiche der Trägerfolie werden dort durch das leitfähige, elastische Material der Trägerfolie selbst gebildet, welche an jeder Meßstelle mit zwei Elektroden versehen ist, die sich an den beiden Seiten der Trägerfolie gegenüberliegen. Diese Ausführung hat den Nachteil, daß die Tragerfolie relativ nachgiebig ist und in ungünstigen Fallen die tatsächliche Lastverteilung verfälschen kann. Wenn der Meßgeber beispielsweise zum Ermitteln von Schwingungen an einem Lager vorgesehen werden soll, könnte er diese so stark dämpfen, daß sie nicht mehr einwandfrei meßbar sind. Ferner ist das Auflösungsvermögen, d. h. das Rastermaß der einzelnen Meßstellen, wegen der Möglichkeit der gegenseitigen Beeinflussung benachbarter Meßstellen nach unten begrenzt.

### Vorteile der Erfindung

Die erfindungsgemäße Anordnung mit den kennzeichnenden Merkmalen des Hauptanspruchs hat demgegenüber den Vorteil, daß die Tragerfolie durch hohe Steifigkeit so an das ganze System angepaßt werden kann, daß die Meßergebnisse auch in ungünstigen Fällen nicht verfälscht werden. Die Gesamtdicke der Tragerfolie samt der Widerstandsmetallschicht und etwaigen Schutzschichten kann in der Größenordnung von 10 μm liegen, so daß sich die Trägerfolie trotz ihrer großen Steifigkeit leicht an gekrümmte Kraftübertragungsflächen anpassen läßt. Durch Foto-Maskentechnik kann die Sensorform der Widerstandsmetallschicht dem Anwendungszweck entsprechend optimal angepaßt und die Struktur im 10 μm-Bereich hergestellt werden. Der erfindungsgemäße Meßgeber eignet sich daher auch besonders gut zur Ermittlung von Kräften, Kraftrichtungen und -verteilungen sowie Schwingungen an Lagern.

Durch die in den Unteransprüchen aufgeführten Maßnahmen sind vorteilhafte Weiterbildungen der Anordnung nach dem Hauptanspruch möglich.

Die Trägerfolie kann zweckmäßig nach Größe und Form den einander zugekehrten Kraftübertragungsflächen der Teile angepaßt und mit einer Mehrzahl von einzeln kontaktierten und abfragbaren Widerstandsmetallschichten versehen sein.

Mittels Multiplexschaltung können die Einzelkräfte schnell erfaßt und Lastverteilungen schnell gemessen werden. Damit ist es möglich, z. B. bei Greifern für Automaten die Lage des Werkstücks aus der Lastverteilung zu erkennen. Durch die Möglichkeit der feinen Strukturbildung des Widerstandsmaterials sind kleinste Sensoren zur Kraftmessung bzw. dicht gepackt zur Messung von Lastverteilungen herstellbar, via es seither nicht möglich war. Als dünne Kraftmeßfolie ist dar Meßgeber ohne großen Umbau in einfacher Weise an vielen Stellen von Maschinen und Geräten einsetzbar. Durch die Kombination von Temperatursensoren und Kraftsensoren auf kleinstem Raum sind solche Sensorfelder als Greifer zum Beispiel für Automaten und Roboter geeignet.

Die Tragerfolie kann aus Metall, Künststoff oder Keramik gebildet sein. Eine besonders steife und dünnwandige Ausführung ergibt sich, wenn die Trägerfolie aus Metall ist, auf welche eine elektrisch isolierende erste. Schicht und darauf eine die Widerstandsmetallschicht bildende zweite Schicht aufgedampft sind. Bei dieser Ausführung kann die Trägerfolie beispielsweise eine Dicke von 5 bis 10 μm, die isolierende erste Schicht eine Dicke von 1 bis 2 μm und die Widerstandsmetallschicht eine Dicke von 0,2 bis 0,5 μm haben.

Bei Verwendung von metallischen Lager- und sonstigen Bauteilen wird vorgeschlagen, die Widerstandsmetallschicht durch eine weitere Isolierschicht abzudecken, die ebenfalls aufgedampft ist und deren Dicke vorzugsweise etwa 0,1 bis 0,5 μm beträgt. Zusätzlich kann eine Deckfolie vorgesehen werden, die durch eine Klebeschicht festgehalten ist, welche an den von der Widerstandsmetallschicht nicht bedeckten Teilen der Tragerfolie angeordnet ist.

Wenn die Deckfolie aus dem gleichen Material besteht und die gleiche Dicke hat vie die Trägerfolie, liegen die Widerstandsmetallschichten in der neutralen Zone, so daß beim Biegen der Meßfolie keine in der Folienebene wirkenden Zug- und Druckkräfte die Widerstandsschichten belasten.

### Zeichnung

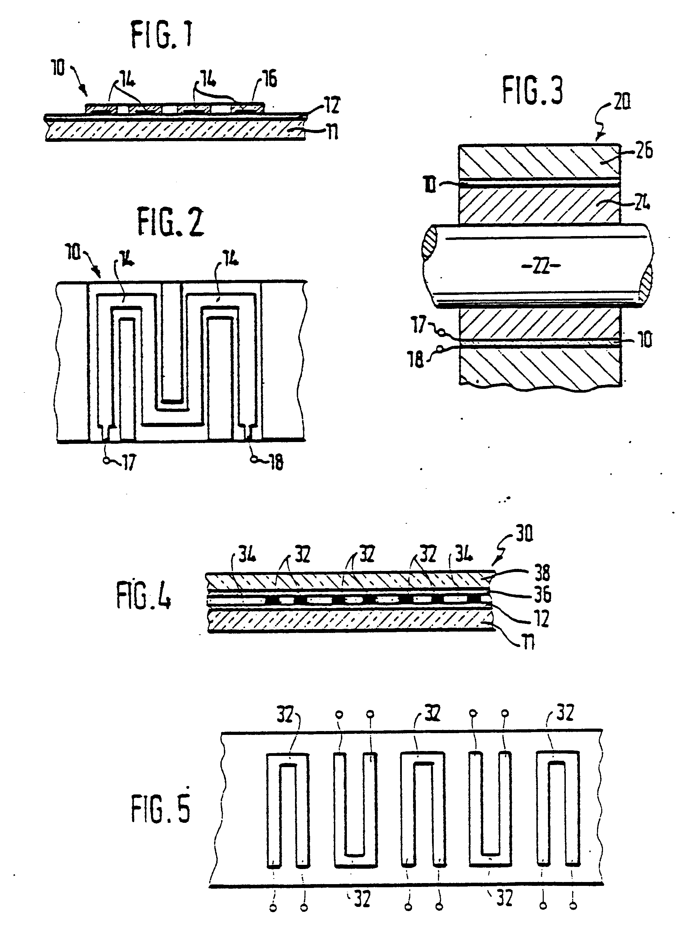

Zwei Ausführungsbeispiele der Erfindung sind in der Zeichnung dargestellt und in der nachfolgenden Beschreibung näher erläutert. Es zeigen Figur 1 einen in einer Abmessung vergrößerten Langsschnitt durch den Meßgeber nach dem ersten Ausführungsbeispiel, Figur 2 eine Draufsicht auf die Widerstandsmetallschicht des Meßgebers nach Figur 1, Figur 3 einen Längsschnitt durch ein Wellenlager mit dem Meßgeber nach Figur 1, Figur 4 einen Langsschnitt durch den Meßgeber nach dem zweiten Ausführungsbeispiel und Figur 5 eine Draufsicht auf die Widerstandsmetallschichten des Meßgebers nach Figur 4.

Beschreibung der Ausführungsbeispiele

Der Meßgeber 10 nach den Figuren 1 und 2 hat eine metallische Trägerfolie 11, deren Dicke beispielsweise 5 bis 10 μm beträgt. Auf die Trägerfolie 11 ist eine durchgehende Isolationsschicht 12 in einer Dicke von etwa 1 bis 2 μm und darauf eine Widerstandsmetallschicht 14 in einer der vorgesehenen Verwendung entsprechenden geometrischen Form, hier in Mäanderform, aufgedampft. Die Dicke der Widerstandsmetallschicht 14 beträgt vorzugsweise etwa 0, 2 bis 0,5 μm. Sie bildet das eigentliche Meßelement, dessen elektrischer Widerstand von dem Druck bzw. der Kraft abhängig ist, welche quer zur Folienebene auf den Meßgeber einwirkt.

Die Widerstandsmetallschicht 14 ist durch eine zweite aufgedampfte Isolationsschicht 16 so abgedeckt, daß der Kraftfluß senkrecht zur Folienebene nur über die Widerstandsmetallschicht verläuft. Die Dicke der Isolationsschicht 16 kann etwa 0,1 bis 0,5 μm betragen, so daß die Gesamtdicke des folienartigen Meßgebers in der Größenordnung von 10 μm liegt. Der Meßgeber zeichnet sich daher durch eine hohe Biegeelastizität sowie durch eine hohe Steifigkeit quer zur Folienebene aus, so daß er Kräfte, flächenhafte Kraftverteilungen und Kraftänderungsgeschwindigkeiten unverfälscht aufnehmen und messen kann. Die Kontaktierung der Widerstandsmetallschicht 14 erfolgt durch die in der Dünnschichttechnik bekannten Mittel, die in der Zeichnung symbolisch bei 17 und 18 angedeutet sind.

In Figur 3 ist als Anwendungsbeispiel ein Gleitlaser 20 für eine Welle 22 dargestellt, in welches der Meßgeber 10 zur Ermittlung der Lagerkräfte eingebaut ist. Der Meßgeber 10 ist zwischen einer Lagerbuchse 24 und einem Lagerkörper 26 angeordnet. Die Widerstandsmetallschicht 14 des Meßgebers 10 kann sich je nach der gewünschten Abfrage über einen Teil oder über den Gesamtumfang der einander zukehrten Kraftübertragungsflächen an Lagerbuchse 24 und Lagerkörper 26 erstrecken. Die auftretenden Kräfte und Kraftänderungen können unverfälscht und ungedämpft auf die Widerstandsmetallschicht 14 übertragen werden, wodurch sie die gewünschten Widerstandsänderungen im angeschlossenen Meßkreis der Auswerteschaltung hervorrufen.

Der Meßgeber 30 nach dem Figuren 4 und 5 hat die gleiche metallische Tragerfolie 11 und die gleiche Isolierschicht 12 vie der Meßgeber nach den Figuren 1 und 2. Auf die Isolierschicht 12 sind einzelne Widerstandsmetallschichten 32 in einer Dicke von beispielsweise 0,2 bis 0,5 μm aufgedampft, die je für sich kontaktierbar sind. Durch Foto-Maskentechnik kann die Struktur im 10 μm-Bereich hergestellt werden.

Die von den Widerstandsmetallschichten 32 nicht bedeckten Flächenabschnitte der Tragerfolie 11 bzw. der Isolierschicht 12 sind mit einer Klebeschicht 34 überzogen, durch welche eine mit einer aufgedampften Isolierschicht 36 versehene Deckfolie 38 an der Trägerfolie 11 festgehalten ist. Die Deckfolie 38 besteht aus dem gleichen Material und hat die gleiche Dicke vie die Trägerfolie 11, so daß die Widerstandsschichten 32 in der neutralen Zone liegen und bei Biegung des folienartigen Meßgebers nicht durch unerwünschte, daß Meßergebnis verfälschende Zug- und Druckspannungen beansprucht wird.

Die Folie nach dem Figuren 4 und 5 eignet sich für das Ermitteln von Lastverteilungen in der Fläche. Die einzelnen Widerstandsmetallschichten 32 und die auf sie wirkenden Einzelkräfte können durch eine Multiplexschaltung schnell abgefragt und ermittelt werden. Damit ist es z. B. möglich, bei Greifern für Automaten die Lage des Werkstücks aus der Lastverteilung zu erkennen.

## Patentansprüche

1. Kraft- bzw. Druckmeßgeber zum Erfassen von zwischen zwei Teilen (24, 26) auftretenden Kräften, mit einer zum Einbau zwischen die Teile bestimmten Trägerfolie (11), die mindestens einen elektrisch kontaktierten Bereich hat, dessen elektrischer Widerstandswert abhängig von der Größe der von den Teilen auf diesen Bereich einwirkenden Kraft ist, dadurch gekennzeichnet, daß die Trägerfolie (11) eine isolierende Oberfläche hat und der elektrisch kontaktierte Bereich durch eine auf die Oberfläche der Trägerfolie (11) aufgebrachte, vorzugsweise aufgedampfte Widerstandsmetallschicht (14) gebildet ist.

2. Meßgeber nach Anspruch 1, dadurch gekennzeichnet, daß die Trägerfolie (11) nach Größe und Form den einander zugekehrten Kraftübertragungsflächen der Teile (24, 26) angepaßt und mit einer Mehrzahl von einzelnen kontaktierten und einzeln abfragbaren Widerstandsmetallschichten (32) versehen ist.

3. Meßgeber nach Anspruch 1 oder 2, dadurch gekennzeichnet, daß die Trägerfolie 11 eine Metallfolie ist, auf welche eine elektrisch isolierende erste Schicht (12) und darauf eine die Widerstandsmetallschicht (14, 32) bildende zweite Schicht aufgedampft sind.

4. Meßgeber nach Anspruch 3, dadurch gekennzeichnet, daß auf die die Widerstandsmetallschicht (14) bildende zweite Schicht eine elektrisch isolierende dritte Schicht (16) aufgedampft ist.

5. Meßgeber nach Anspruch 3, dadurch gekennzeichnet, daß die von der Widerstandsmetallschicht (32) nicht überdeckten Bereiche der Trägerfolie (11) mit einer Klebeschicht (34) überzogen sind, welche eine Deckfolie (38) festhält.

6. Meßgeber nach Anspruch 5, dadurch gekennzeichnet, daß die Deckfolie (38) aus dem gleichen Material besteht und die gleiche Dicke hat vie die Trägerfolie (11).

## Claims

1. Force or pressure transducer for registering forces occurring between two parts (24, 26), with a carrier foil (11) which is intended for insertion between the parts and has at least one electrically contacting region whose electrical resistance value is dependent on the magnitude of the force acting on said region from the parts, characterized in that the carrier foil (11) has an insulating surface and the electrically contacting region is formed by a layer (14) of high-resistance metal deposited, preferably by vapour deposition, on the surface of the carrier foil (11).

2. Transduce according to claim 1, characterized in that the carrier foil (11) is matched in size and shape to the force transmission faces which face each other of the parts (24, 26) and is provided with a multiplicity of individual contacting and individually scanned layers (32) of high-resistance metal.

3. Transducer according to claim 1 or 2, characterized in that the carrier foil 11 is a metal foil onto which an electrically insulating first layer (12) and a second layer forming the layer (14, 32) of high-resistance metal thereon have been vapour-deposited.

4. Transducer according to claim 3, characterized in that an electrically insulating third layer (16) has been vapour-deposited onto the second forming the layer (14) of high-resistance metal.

5. Transducer according to claim 3, characterized in in that the regions of the carrier foil (11) not covered by the layer (32) of high-resistance metal are coated with an adhesive layer (34) which secures a covering foil (38).

6. Transducer according to claim 5, characterized in that the covering foil (38) consists of the same material and has the same thickness as the carrier foil (11).


**Revendications**

1. Transducteur de force ou de pression pour la saisie de forces survenant entre deux pièces (24, 26) avec une feuille support (11) destinée au montage entre les pièces, qui possède au moins une zone pour le contact électrique, dont la valeur de la résistance électrique est fonction de l'importance de la force s'exerçant sur les pièces dans cette zone, caractérisé en ce que la feuille support (11) possède une surface isolante et que la zone du contact électrique est formée par une couche métallique résistante (14) rapportée sur la surface de la feuille support (11) et avantageusement par vaporisation.

2. Transducteur selon la revendication 1, caractérisé en ce que la feuille support (11) est adaptée en taille et en forme aux surfaces des pièces (24, 26) qui lui sont opposées et qui transmettent les forces et qui possède un certain nombre de couches métalliques résistantes (32) contactables individuellement et interrogeables individuellement.

3. Transducteur selon la revendication 1 ou 2, caractérisé en ce que la feuille support (11) est une feuille métallique sur laquelle sont vaporisées une première couche isolante électriquement (12) et sur celle-ci une deuxième couche formant la couche métallique résistante (14, 32).

4. Transducteur selon la revendication 3, caractérisé en ce qu'une troisième couche (16) électriquement isolante est vaporisée sur la deuxième couche formant la couche métallique résistante (14).

5. Transducteur selon la revendication 3, caractérisé en ce que les zones de feuille support (11) qui ne sont pas recouvertes par la couche métallique résistante (32) sont recouvertes d'une couche de colle (34), laquelle maintient une feuille de recouvrement (38).

6. Transducteur selon la revendication 5, caractérisé en ce que la feuille de recouvrement (38) est composée du même matériau et possède la même épaisseur que la feuille support (11).

# FIG. 1

10 14 14 16 12 11

# FIG. 3

20 26 10 24 -22- 17 18 10

# FIG. 2

10 14 14 17 18

# FIG. 4

34 32 32 32 34 30 38 36 12 11

# FIG. 5

32 32 32 32 32 32